# EUROPÄISCHE PATENTANMELDUNG

(11) **EP 4 342 711 A1**
(43) Veröffentlichungstag der Anmeldung: **27.03.2024**
(21) Anmeldenummer: 23186382.0
(22) Anmeldetag: 19.07.2023
(51) Int. Cl.: B60K 35/10, B60K 35/21, B60K 35/22, B60K 35/65

(54) **BENUTZERSCHNITTSTELLE FÜR EINE MASCHINE**

(30) Priorität: 23.09.2022 DE 102022124469
(71) Anmelder: CLAAS E-Systems GmbH, 49201 Dissen (DE)
(72) Erfinder: Losch, Michael, 33775 Versmold (DE); Heydekorn, Jens, 33428 Harsewinkel (DE)
(74) Vertreter: CLAAS Gruppe

(57) **Zusammenfassung**

Eine Benutzerschnittstelle für eine Maschine, insbesondere eine landwirtschaftliche Erntemaschine, umfasst eine Mehrzahl von Anzeigeeinrichtungen (17, 20, 21), darunter eine primäre Anzeigeeinrichtung (17) und wenigstens eine sekundäre Anzeigeeinrichtung (20, 21), und eine Steuereinheit (23), die mit den Anzeigeeinrichtungen (17, 20, 21) zum Steuern von auf diesen angezeigten Bildinhalten (24, 25) verbunden ist. Die Steuereinheit (23) ist eingerichtet, einen sekundären Bildinhalt (25) der sekundären Anzeigeeinrichtung (20) auf die primäre Anzeigeeinrichtung (17) umzulegen, um von dieser angezeigt zu werden. Die Benutzerschnittstelle umfasst wenigstens ein Bedienelement (18, 19), mittels dessen der auf der primären Anzeigeeinrichtung (17) angezeigte sekundäre Bildinhalt (25) editierbar ist.

## Beschreibung

Die vorliegende Erfindung betrifft eine Benutzerschnittstelle für eine Maschine, insbesondere eine landwirtschaftliche Erntemaschine. Komplexe Maschinen wie insbesondere landwirtschaftliche Erntemaschinen sind oft eingerichtet, um mehrere Funktionen wie etwa fahrergesteuerte oder autonome Fortbewegung, Aufnahme und Verarbeitung von Erntegut, Klimatisierung einer Fahrerkabine, Nutzung von Telekommunikations- und mobilen Datendiensten auszuführen, die mehr oder weniger weitgehend unabhängig voneinander funktionieren und oft nicht einmal von demselben Hersteller entwickelt worden sind. Die Folge davon ist, dass in der Fahrerkabine einer solchen Maschine diverse Benutzerschnittstellen untergebracht werden müssen und nicht immer jede von diesen einen Platz findet, an dem sie für den Fahrer gut wahrnehmbar und bedienbar ist. Insbesondere wenn die betreffenden Funktionen von verschiedenen Herstellern entwickelt worden sind, unterscheiden sie sich häufig in der Art der Benutzerführung, so dass der Fahrer diese für jede Funktion eigens lernen muss, bzw. eine effiziente Bedienung der einzelnen Funktionen an mangelnder Kenntnis und Routine in der Handhabung der Benutzerschnittstellen scheitert. Hinzu kommt, dass manche dieser Funktionen nicht zur Grundausstattung einer Maschine gehören, sondern nur auf Kundenwunsch als Sonderausstattung eingebaut werden. Wenn ein Fahrer auf einer für ihn ungewohnten Maschine eingesetzt wird, kann daher der Fall auftreten, dass er eine Funktion der Sonderausstattung nicht nutzen kann, weil er gar nicht bemerkt, dass sie vorhanden ist.

Eine Benutzerschnittstelle für eine landwirtschaftliche Maschine mit mehreren Anzeigeeinrichtungen ist aus EP 3 371 689 B1 bekannt. Sekundäre Anzeigeeinrichtungen werden hier genutzt, um ihnen Ausschnitte eines auf einer primären Anzeigeeinrichtung dargestellten primären Bildinhalts zuzuweisen und so eine genauere Beobachtung dieser Ausschnitte zu ermöglichen, insbesondere um das Bild einer Überwachungskamera detailreicher als auf der primären Anzeigeeinrichtung ausgeben zu können.

Ein Ziel der vorliegenden Erfindung ist, eine Benutzerschnittstelle für eine Maschine zu schaffen, die es einem Benutzer erleichtert, unter auf verschiedenen Anzeigeeinrichtungen verteilten Informationen eine gewünschte Information zu finden und/oder festzulegen, welche Information wie angezeigt wird, und die in der Folge auch auf der angezeigten Information basierende Steuerungsvorgänge vereinfacht.

Das Ziel wird erreicht, indem bei einer Benutzerschnittstelle für eine Maschine, insbesondere eine landwirtschaftliche Erntemaschine, mit einer Mehrzahl von Anzeigeeinrichtungen, darunter eine primäre Anzeigeeinrichtung und wenigstens eine sekundäre Anzeigeeinrichtung, und einer Steuereinheit, die mit den Anzeigeeinrichtungen zum Steuern der auf diesen angezeigten Bildinhalte verbunden ist, die Steuereinheit eingerichtet ist, einen sekundären Bildinhalt der sekundären Anzeigeeinrichtung auf die primäre Anzeigeeinrichtung umzulegen, um von dieser angezeigt zu werden, und dass die Benutzerschnittstelle wenigstens ein Bedienelement umfasst, mittels dessen der auf der primären Anzeigeeinrichtung angezeigte sekundäre Bildinhalt editierbar ist. Da ein Benutzer sich mit Hilfe der Steuereinheit sämtliche in sekundären Bildinhalten enthaltene Information auf der primären Anzeigeeinrichtung anzeigen lassen kann, ist es für ihn von geringer Bedeutung, wo sich die sekundäre Anzeigeeinrichtung befindet; insbesondere kann diese an einer Stelle platziert sein, die vom Fahrersitz einer landwirtschaftlichen Maschine aus zwar gut sichtbar und ablesbar ist, aber zu weit entfernt, um vom Fahrersitz aus auf Bedienelemente der sekundäre Anzeigeeinrichtung zugreifen zu können. Es genügt, dass das wenigstens eine Bedienelement gut erreichbar ist. Indem außerdem dasselbe Bedienelement zum Editieren des Anzeigeinhalts verschiedener sekundärer Bildinhalte (oder, wenn dieser auf der primären Anzeigeeinrichtung angezeigt wird, des primären Bildinhalts) genutzt wird, kann die Art und Weise, in der die verschiedenen Bildinhalte editiert werden, unabhängig von den den Anzeigeeinrichtungen im Normalbetrieb zugeordneten Funktionen der Maschine vereinheitlicht werden.

Ein editierter sekundärer Bildinhalt sollte zurück auf eine der sekundären Anzeigeeinrichtungen umlegbar sein, um die primäre Anzeigeeinrichtung wieder zum Steuern der ihr im Normalbetrieb zugewiesenen Funktion(en) nutzen zu können.

Die Steuereinheit kann eingerichtet sein, den primären Bildinhalt auf der sekundären Anzeigeeinrichtung anzuzeigen, während der sekundäre Bildinhalt auf die primäre Anzeigeeinrichtung umgelegt ist. So bleibt die im Normalbetrieb auf der primären Anzeigeeinrichtung angezeigte Information ständig verfügbar.

Das Editieren eines Bildinhalts kann insbesondere das Auswählen von in dem Bildinhalt anzuzeigenden grafischen Elementen, insbesondere von Anzeigen für Messwerte oder Sollwerte von Betriebsgrößen der landwirtschaftlichen Maschine, das Festlegen eines Anzeigeformats für diese Anzeigen und/oder das Platzieren der zur Anzeige ausgewählten grafischen Elemente im Bildinhalt umfassen. So kann der Benutzer dafür sorgen, dass genau die Information, die er benötigt, in der von ihm gewünschten Art und Weise und/oder an dem von ihm bevorzugten Ort angezeigt wird; eine Überfrachtung mit vom Benutzer nicht benötigter Information kann vermieden werden.

Das wenigstens eine Bedienelement ist vorzugsweise in einer gemeinsamen primären Baugruppe mit der primären Anzeigeeinrichtung verbunden, wohingegen die sekundäre Anzeigeeinrichtung Teil einer von der primären Baugruppe verschiedenen sekundären Baugruppe ist. So kann dem Benutzer intuitiv deutlich gemacht werden, dass das Bedienelement zum Steuern der primären Anzeigeeinrichtung dient bzw. ein Editieren eines sekundären Bildinhalts dann ermöglicht, wenn dieser auf die primäre Anzeigeeinrichtung umgelegt ist.

Als Reaktion auf eine erste Eingabe an dem Bedienelement kann vorgesehen sein dass die Steuereinheit - vorzugsweise wenigstens auf der primären Anzeigeeinrichtung - ein Zwischenbild anzeigt, das von dem sekundären und dem primären Bildinhalt verschieden ist. Das Zwischenbild kann - insbesondere wenn nur eine sekundäre Anzeigeeinrichtung vorhanden ist, deren Bildinhalt umgelegt werden kann - einfach nur dazu dienen, sicherzustellen, dass der Benutzer die Veränderung des angezeigten Bildinhalts wahrnimmt und nicht später überrascht wird, wenn er eine erwartete Information nicht an der erwarteten Stelle der Anzeigeeinrichtung findet.

Wenn zwei oder mehr sekundäre Anzeigeeinrichtungen vorhanden sind, kann das Zwischenbild zweckmäßigerweise ein Auswahlmenü darstellen, anhand dessen der Benutzer den auf die primäre Anzeigeeinrichtung umzulegenden sekundären Bildinhalt mittels des Bedienelements auswählen kann.

Um zu verhindern, dass eine versehentliche Betätigung des Bedienelements zu einer Umlegung eines Bildschirminhalts führt, kann vorgesehen sein, dass die Steuereinheit vom Zwischenbild auf den primären Bildinhalt zurückschaltet, wenn nicht während einer vorgegebenen Wartezeit der Benutzer den Wunsch nach Umlegung bestätigt oder unter mehreren sekundären Bildinhalten den auf die primäre Anzeigeeinrichtung umzulegenden auswählt.

Als Bedienelement kann insbesondere ein Dreh-Drückgeber vorgesehen sein. Dieser ermöglicht eine effiziente Steuerung unabhängig von der Zahl der sekundären Anzeigeeinrichtungen, indem das Umlegen eines Bildinhalts durch Drücken des Dreh-Drückgebers steuerbar ist, während eine Auswahl zwischen verschiedenen sekundären Bildinhalten, wenn nötig, durch Drehen des Dreh-Drückgebers erfolgen kann.

Um weitere Eingaben vorzunehmen, kann das Bedienelement ferner eine berührungsempfindliche Oberfläche zumindest der primären Anzeigeeinrichtung umfassen. Diese kann beispielsweise genutzt werden, um beim Editieren eines Bildinhalts Bildelemente zu verschieben. So ermöglicht das Umlegen auf die primäre Anzeigeeinrichtung ein komfortables Editieren eines sekundären Bildinhalts, ohne dass die entsprechende sekundäre Anzeigeeinrichtung über eine berührungsempfindliche Oberfläche verfügen müsste.

Gegenstand der Erfindung ist ferner eine landwirtschaftliche Erntemaschine mit einer Benutzerschnittstelle wie oben beschrieben.

Besonders vorteilhaft einsetzbar ist die Benutzerschnittstelle bei einer landwirtschaftlichen Erntemaschine, bei der die sekundäre Anzeigeeinrichtung nachrüstbar oder eine Sonderausstattung ist, die vom Hersteller nur auf Kundenwunsch eingebaut wird und nicht bei allen Maschinen einer Serie vorhanden ist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht eines Mähdreschers als Beispiel einer erfindungsgemäßen Erntemaschine;
- Fig. 2: eine Innenansicht der Fahrerkabine des Mähdreschers aus Fig. 1;
- Fig. 3: auf einer primären und einer sekundären Anzeigeeinrichtung des Mähdreschers in einem Normalbetriebsmodus angezeigte Bildinhalte;
- Fig. 4: auf der primären und der sekundären Anzeigeeinrichtung angezeigte Zwischenbilder;
- Fig. 5: ein als Teil eines Zwischenbildes angezeigtes Auswahlmenü; und
- Fig. 6: auf der primären und der sekundären Anzeigeeinrichtung nach einem Umlegen angezeigte Bildinhalte.

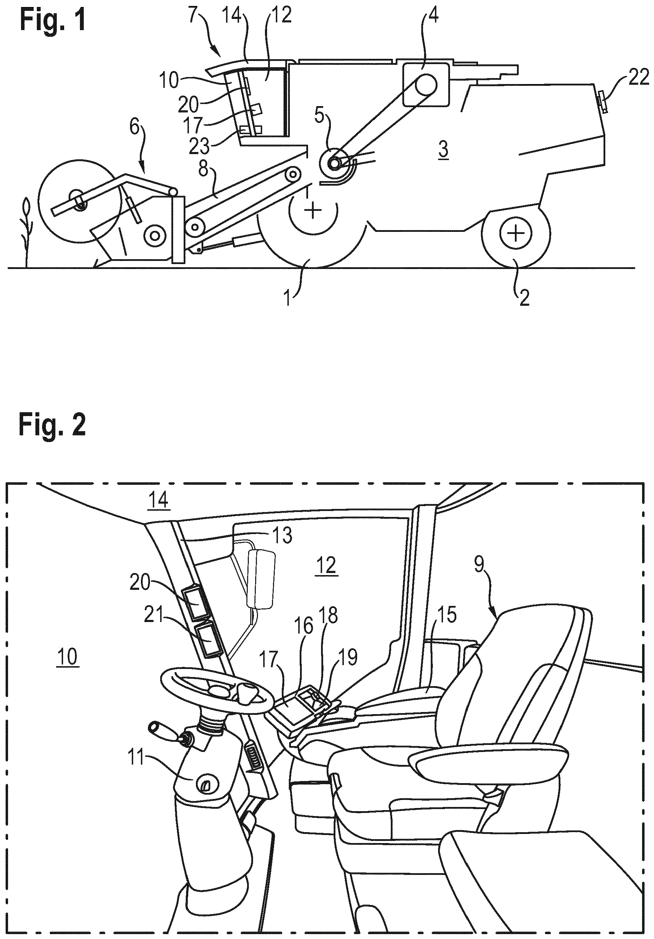

Der in Fig. 1 gezeigte Mähdrescher hat in an sich bekannter Weise ein Fahrgestell mit vorderen Rädern 1 und lenkbaren hinteren Rädern 2 sowie eine auf dem Fahrgestell montierte Karosserie 3, in der ein Verbrennungsmotor 4, üblicherweise ein Dieselmotor, eine Dreschtrommel 5 und diverse Aggregate zur Weiterverarbeitung von aus der Dreschtrommel ausgeschiedenem Erntegut untergebracht sind. Der Verbrennungsmotor 4 treibt über nicht dargestellte Kupplungen und Getriebe die Räder 1 und 2, die Dreschtrommel 5 und die Weiterverarbeitungsaggregate an.

Ein Erntevorsatz 6 ist austauschbar an einem höhenverstellbaren Schrägförderer 8 montiert, der von dem Erntevorsatz 6 eingesammeltes Erntegut der Dreschtrommel 5 zuführt.

Eine Fahrerkabine 7 ist über dem Schrägförderer 8 angeordnet. Fig. 2 zeigt eine Innenansicht der Fahrerkabine 7. Zu sehen sind ein Fahrersitz 9, eine zwischen dem Fahrersitz 9 und einer Frontscheibe 10 angeordnete Lenksäule 11, eine Seitenwand 12 und eine sich zwischen der Seitenwand 12 und der Frontscheibe 10 erstreckende, ein Kabinendach 14 tragende A-Säule 13.

Am vorderen Ende einer Armlehne 15 des Fahrersitzes 9 ist ein kombiniertes Eingabe- und Anzeigeinstrument 16 angebracht. Es umfasst als eine primäre Anzeigeeinrichtung 17 einen Bildschirm; als Bedienelement fungieren eine berührungsempfindliche Oberfläche des Bildschirms, ein Dreh-Drückgeber 18 und mehrere um den Dreh-Drückgeber 18 herum gruppierte Tasten 19. Das Eingabe- und Anzeigeinstrument 16 ist vorgesehen, um im Ernteeinsatz unverzichtbare Komponenten des Mähdreschers 1 zu steuern und ist daher ein obligatorischer Bestandteil des in Fig. 1 gezeigten Mähdreschers und aller anderen Mähdrescher derselben Serie, unabhängig von eventuellen Sonderausstattungsmerkmalen.

Um weitere, eventuell optionale Komponenten des Mähdreschers überwachen und/oder steuern zu können, wird über das Eingabe- und Anzeigeinstrument 16 und seine primäre Anzeigeeinrichtung 17 hinaus zusätzliche Anzeigefläche benötigt. Diese kann, wie in Fig. 2 gezeigt, in Form von sekundären Anzeigeeinrichtungen 20, 21 an anderer Stelle der Fahrerkabine 7 bereitgestellt werden. Platz, an dem eine sekundäre Anzeigeeinrichtung nicht die Sicht des Fahrers ins Freie behindert, ist knapp. Ein geeigneter und dennoch gut sichtbarer Platz ist an der A-Säule 13, allerdings ist dieser so weit entfernt, dass die sekundären Anzeigeeinrichtungen 20, 21 dort vom Fahrersitz 9 aus nur schwerlich mit der Hand zu erreichen und zu bedienen sind. Es ist daher nicht zweckmäßig, Bedienelemente, mit denen ein auf einer der sekundären Anzeigeeinrichtungen 20, 21 angezeigter sekundärer Bildinhalt editierbar ist, an den Anzeigeeinrichtungen 20, 21 selber anzubringen. Wenn jedoch Bedienelemente entfernt von den Anzeigeeinrichtungen 20, 21 angebracht sind, ist es für den Fahrer nicht intuitiv ersichtlich, in welcher Beziehung diese Bedienelemente zur Anzeigeeinrichtung stehen und welche Wirkung ihre Betätigung hat.

Eine über eine sekundäre Anzeigeeinrichtung zu überwachende Komponente kann beispielsweise eine Kamera 22 am Heck der Karosserie 3 (s. Fig. 1) sein, deren Bilder auf einer der Anzeigeeinrichtungen 20, 21 angezeigt werden können; in Betracht kommen aber auch z.B. Sensoren, die bestimmte Parameter der Verarbeitung des Ernteguts in der Dreschtrommel 5 und den diversen Aggregaten zur Weiterverarbeitung erfassen und deren Messergebnisse von einer Steuereinheit 23 für eine automatische Optimierung der Erntegutverarbeitung mittels eines Fahrerassistenzsystems benötigt werden, oder Komponenten, deren Betrieb anhand dieser Messergebnisse und/oder von vom Fahrer festzulegenden Sollwerten gesteuert werden.

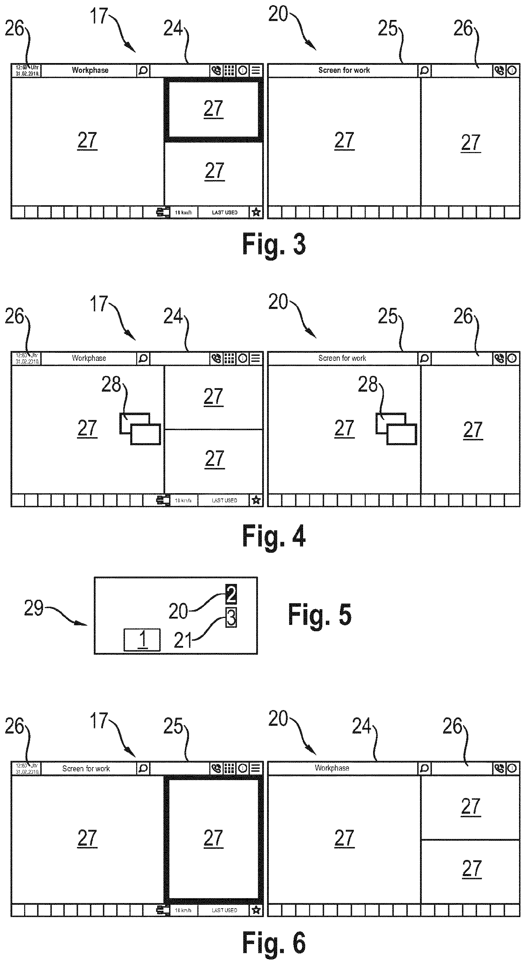

Fig. 3 zeigt eine schematische Ansicht der primären Anzeigeeinrichtung 17 und einer der sekundären Anzeigeeinrichtungen 20 unter normalen Betriebsbedingungen, d.h. die primäre Anzeigeeinrichtung 17 wird von der Steuereinheit 13 veranlasst, einen primären Bildinhalt 24 anzuzeigen, der Auskunft gibt über der primären Anzeigeeinrichtung 17 permanent zugeordnete, der Grundausstattung des Mähdreschers 1 angehörige Komponenten, und die sekundäre Anzeigeeinrichtung 20 zeigt einen sekundären Bildinhalt 25 mit Informationen über eine ihr zugeordnete Komponente. Eine Kopfzeile 26 in jedem Bildinhalt 24, 25 kann eine für den Bildinhalt charakteristische Bezeichnung in Form von Text oder einem Ideogramm enthalten. Einen Hauptteil jedes Bildinhalts 24, 25 nehmen ein oder mehrere Anzeigefelder 27 ein. Diese können jeweils den Output eines Sensors anzeigen, sei es in Form eines Kamerabildes oder in Form einer Zahl oder der Abbildung eines Messinstruments zum Anzeigen einer skalaren Messgröße; sie können aber auch zum Anzeigen eines aktuell eingestellten Sollwerts einer beliebigen vom Fahrer zu steuernden Betriebsgröße des Mähdreschers vorgesehen sein. Im Fall der Fig. 3 ist eines der Anzeigefelder 27 des primären Bildinhalts 24 hervorgehoben, um anzuzeigen, dass eine vom Fahrer am Bedienelement vorgenommene Eingabe sich auf dieses Anzeigefeld 27 auswirken wird. Eine solche Eingabe kann zum Beispiel darin bestehen, dass der Fahrer das Anzeigefeld 27 auf der Anzeigeeinrichtung 17 mit dem Finger antippt und anschließend den Finger über den Bildschirm bewegt, um dem Anzeigefeld 27 einen neuen Platz zuzuweisen, dass er den Dreh-Drückgeber 18 dreht, um den Inhalt des jeweils ausgewählten Anzeigefelds 27 zu verändern, z.B. die Ausgabe eines anderen Sensors zur Darstellung auf dem Anzeigefeld 27 zu wählen, das Format zu ändern, in dem die Sensorausgabe dargestellt wird, oder einen in dem Anzeigefeld 27 angezeigten Sollwert einer Betriebsgröße zu verändern.

Eine der Tasten 19 ist vorgesehen, um damit ein Umlegen des sekundären Bildinhalts 25 der Anzeigeeinrichtung 20 oder 21 auf die Anzeigeeinrichtung 17 zu veranlassen. Das Betätigen dieser Taste 19 bewirkt zunächst, dass die Steuereinheit 13, wie in Fig. 4 gezeigt, ein Zwischenbild an die Anzeigeeinrichtungen 17, 20, 21 ausgibt, dass sich unübersehbar von den Bildinhalten 24, 25 der Fig. 3 unterscheidet. Im hier betrachteten Beispiel besteht der Unterschied darin, dass die Hauptteile der Bildinhalte 24, 25 anders eingefärbt und kontrastärmer sind als im Normalbetriebsmodus der Fig. 3, so dass der Fahrer aus der Betrachtung der Bildinhalte 24, 25 zwar noch dieselbe Information gewinnen kann wie im Normalbetriebsmodus, allerdings dafür genauer hinschauen muss. Zusätzlich verdeutlichen eingeblendete Icons 28, dass sich die Anzeigeeinrichtungen 17, 20, 21 in einem Übergangszustand zu einem Einstellbetriebsmodus befinden.

Wenn der Mähdrescher 1 nur eine sekundäre Anzeigeeinrichtung 20 besitzt, kann die Steuereinheit 23, nachdem die Zwischenbilder der Fig. 4 während einer vorgegebenen Übergangszeit von z.B. 1 s Dauer angezeigt worden sind, um den Fahrer auf den bevorstehende Übergang in den Einstellbetriebsmodus hinzuweisen, eine Umschaltung in den Einstellbetriebsmodus automatisch, ohne weitere Eingabe des Fahrers, vornehmen.

Um einer versehentlichen Umschaltung in den Einstellbetriebsmodus vorzubeugen, kann aber auch vorgesehen werden, dass, der Fahrer in dem Übergangszustand seinen Wunsch, in den Einstellbetriebsmodus zu wechseln und den sekundären Bildinhalt 25 auf die primäre Anzeigeeinrichtung 17 umzulegen, durch eine Eingabe bestätigt, etwa durch Drücken des Dreh-Drückgebers 18. Tut er dies während einer vorgegebenen Wartezeit nicht, oder betätigt er unter den Tasten 19 eine Abbruchtaste, kehren die Steuereinheit 23 und die Anzeigeeinrichtungen 17, 20, 21 in den Normalbetriebsmodus der Fig. 3 zurück.

Wenn mehrere sekundäre Anzeigeeinrichtungen 20, 21 vorhanden sind, muss diejenige, deren Bildinhalt im Einstellbetriebsmodus auf die primäre Anzeigeeinrichtung 17 umgelegt werden soll, vom Fahrer festgelegt werden. In diesem Fall blendet die Steuereinheit 13 anstelle des Icons 28 in die Zwischenbilder ein Auswahlmenü 29 ein. Dieses Auswahlmenü 29 kann, wie in Fig. 5 gezeigt, eine schematische Darstellung der vorhandenen Anzeigeeinrichtungen 17, 20, 21 sein, wobei das Auswahlmenü 29, um dem Fahrer das Identifizieren der einzelnen Anzeigeeinrichtungen 17, 20, 21 zu ermöglichen, charakteristische Merkmale der einzelnen Anzeigeeinrichtungen wie etwa ihre Platzierung in der Fahrerkabine aus der Sicht des Fahrers, ihre Größe, ihr Aspektverhältnis, einen Namen oder ein Ideogramm einer im Normalbetrieb mit der Anzeigeeinrichtung überwachten Baugruppe wiedergibt. Eine der Anzeigeeinrichtungen, hier die Anzeigeeinrichtung 20, ist in der Darstellung der Fig. 5 hervorgehoben, um zu verdeutlichen, dass die Steuereinheit 23, wenn der Fahrer die Auswahl durch eine entsprechende Eingabe bestätigt und dadurch in den Einstellbetriebsmodus wechselt, den Bildinhalt dieser Anzeigeeinrichtung 20 auf die primäre Anzeigeeinrichtung 17 umlegen wird. Um statt der Anzeigeeinrichtung 20 eine andere auszuwählen, kann der Fahrer den Dreh-Drückgeber 18 drehen. Den Anzeigeeinrichtungen 17, 20, 21 ist eine (in Fig. 5 durch Nummern 1, 2, 3 dargestellte) Reihenfolge zugewiesen; durch Drehen des Dreh-Drückgebers 18 um einen Schritt in einer ersten Drehrichtung wird die in der Reihenfolge nachfolgende, durch Drehen um einen Schritt in einer zweiten, entgegengesetzten Drehrichtung die vorhergehende Anzeigeeinrichtung ausgewählt.

Nachdem der Fahrer die Auswahl bestätigt hat, legt die Steuereinheit 13 den Bildinhalt 25 der ausgewählten sekundären Anzeigeeinrichtung 20 auf die primäre Anzeigeeinrichtung 17 und deren Bildinhalt 24 auf die Anzeigeeinrichtung 20 um, wie in Fig. 6 gezeigt. Die oben für den Bildinhalt 24 beschriebenen Möglichkeiten des Editierens sowie eventuell andere, hier nicht beschriebene, stehen nun für den Bildinhalt 25 zur Verfügung, d.h. der Fahrer kann in diesem Anzeigefelder 27 verschieben, in jedem Anzeigefeld 27 anzuzeigende Informationen oder deren Anzeigeformat auswählen.

Denkbar ist auch, nach Umlegen des Bildinhalts 25 auf die Anzeigeeinrichtung 17 in einem Anzeigefeld 27 des Bildinhalts 25 anstelle des im Normalbetrieb angezeigten Messwerts einer Messgröße einen Sollwert für diese anzuzeigen und über das Bedienelement einzustellen, den die Steuereinheit nach Rückkehr in den Normalbetriebs einzustellen versuchen wird. Für das Herauf- und Herunterregeln eines Sollwerts und anschließendes Bestätigen des eingestellten Werts ist der Dreh-Drückgeber 18 in offensichtlicher Weise geeignet. Der Fahrer kann somit einen Sollwert, der im Normalbetriebszustand auf einer sekundären Anzeigeeinrichtung 20 angezeigt wird und dort womöglich aufgrund der Platzierung der Anzeigeeinrichtung 20 oder ihrer spartanischen Ausstattung mit Bedienelementen beschwerlich zu verstellen ist, auf die bequemer zu erreichende primäre Anzeigeeinrichtung 17 "holen", sie mit Hilfe von deren Bedienelementen 18, 19 verändern und anschließend an die sekundäre Anzeigeeinrichtung 20 zurückschicken.

Eine der Tasten 29 kann vorgesehen sein, um nach erfolgreichem Editieren des Bildinhalts 25 vom Fahrer betätigt zu werden und dadurch die Steuereinheit 23 in den Normalbetriebsmodus zurückzuversetzen. Eine Rückkehr in den Normalbetriebsmodus kann auch automatisch erfolgen, wenn im Laufe einer vorgegebenen Wartezeit keine Eingabe zum Editieren des Bildinhalts 25 am Bedienelement stattgefunden hat.

### Bezugszeichen

- 1: Rad
- 2: Rad
- 3: Karosserie
- 4: Verbrennungsmotor
- 5: Dreschtrommel
- 6: Erntevorsatz
- 7: Fahrerkabine
- 8: Schrägförderer
- 9: Fahrersitz
- 10: Frontscheibe
- 11: Lenksäule
- 12: Seitenwand
- 13: A-Säule
- 14: Kabinendach
- 15: Armlehne
- 16: Eingabe- und Anzeigeinstrument
- 17: primäre Anzeigeeinrichtung
- 18: Dreh-Drückgeber
- 19: Taste
- 20: sekundäre Anzeigeeinrichtung
- 21: sekundäre Anzeigeeinrichtung
- 22: Kamera
- 23: Steuereinheit
- 24: primärer Bildinhalt
- 25: sekundärer Bildinhalt
- 26: Kopfzeile
- 27: Anzeigefeld
- 28: Icon
- 29: Auswahlmenü

## Patentansprüche

1. Benutzerschnittstelle für eine Maschine, insbesondere eine landwirtschaftliche Erntemaschine, mit einer Mehrzahl von Anzeigeeinrichtungen (17, 20, 21), darunter eine primäre Anzeigeeinrichtung (17) und wenigstens eine sekundäre Anzeigeeinrichtung (20, 21), und einer Steuereinheit (23), die mit den Anzeigeeinrichtungen (17, 20, 21) zum Steuern von auf diesen angezeigten Bildinhalten (24, 25) verbunden ist, **dadurch gekennzeichnet, dass** die Steuereinheit (23) eingerichtet ist, einen sekundären Bildinhalt (25) der sekundären Anzeigeeinrichtung (20) auf die primäre Anzeigeeinrichtung (17) umzulegen, um von dieser angezeigt zu werden, und dass die Benutzerschnittstelle wenigstens ein Bedienelement (18, 19) umfasst, mittels dessen der auf der primären Anzeigeeinrichtung (17) angezeigte sekundäre Bildinhalt (25) editierbar ist.

2. Benutzerschnittstelle nach Anspruch 1, **dadurch gekennzeichnet, dass** die Steuereinheit (23) eingerichtet ist, einen editierten sekundären Bildinhalt (25) von der primären Anzeigeeinrichtung (17) auf eine der sekundären Anzeigeeinrichtungen (20) zurück umzulegen.

3. Benutzerschnittstelle nach Anspruch 1 oder 2, **dadurch gekennzeichnet, dass** die Steuereinheit (23) eingerichtet ist, während der sekundäre Bildinhalt (25) auf die primäre Anzeigeeinrichtung (17) umgelegt ist, den primären Bildinhalt (24) auf der sekundären Anzeigeeinrichtung (20) anzuzeigen.

4. Benutzerschnittstelle nach einem der vorhergehenden Ansprüche, **dadurch gekennzeichnet, dass** das Editieren eines Bildinhalts (25) das Auswählen von in dem Bildinhalt (25) anzuzeigenden grafischen Elementen, insbesondere von analogen oder digitalen Messgeräteanzeigen, das Festlegen eines Anzeigeformats für die Messgeräteanzeigen und/oder das Platzieren der zur Anzeige ausgewählten grafischen Elemente im Bildinhalt (25) umfasst.

5. Benutzerschnittstelle nach einem der vorhergehenden Ansprüche, **dadurch gekennzeichnet, dass** das wenigstens eine Bedienelement (18, 19) in einer gemeinsamen primären Baugruppe (16) mit der primären Anzeigeeinrichtung (17) verbunden ist und die sekundäre Anzeigeeinrichtung (20) Teil einer von der primären Baugruppe (16) verschiedenen sekundären Baugruppe ist.

6. Benutzerschnittstelle nach einem der vorhergehenden Ansprüche, **dadurch gekennzeichnet, dass** die Steuereinheit (23) eingerichtet ist, als Reaktion auf eine erste Eingabe an dem Bedienelement (18, 19) ein Zwischenbild anzuzeigen, das von dem sekundären und dem primären Bildinhalt (25, 24) verschieden ist.

7. Benutzerschnittstelle nach Anspruch 6, **dadurch gekennzeichnet, dass** das Zwischenbild ein Auswahlmenü (29) darstellt, und dass die Steuereinheit (23) die Auswahl eines auf die primäre Anzeigeeinrichtung (17) umzulegenden sekundären Bildinhalts (25) mittels des Bedienelements (18, 19) unterstützt.

8. Benutzerschnittstelle nach einem der vorhergehenden Ansprüche, **dadurch gekennzeichnet, dass** das Bedienelement einen Dreh-Drückgeber (18) umfasst und dass optional das Umlegen eines Bildinhalts (25) durch Drücken des Dreh-Drückgebers (18) steuerbar ist und weiter optional eine Auswahl zwischen mehreren auf die primäre Anzeigeeinrichtung (17) umlegbaren sekundären Bildinhalten (25) durch Drehen des Dreh-Drückgebers (18) steuerbar ist.

9. Benutzerschnittstelle nach einem der vorhergehenden Ansprüche, **dadurch gekennzeichnet, dass** das Bedienelement eine berührungsempfindliche Oberfläche der primären Anzeigeeinrichtung (17) umfasst.

10. Landwirtschaftliche Erntemaschine mit einer Benutzerschnittstelle nach einem der vorhergehenden Ansprüche.

11. Landwirtschaftliche Erntemaschine nach Anspruch 10, **dadurch gekennzeichnet, dass** die sekundäre Anzeigeeinrichtung (20, 21) nachrüstbar oder eine Sonderausstattung der Erntemaschine ist.
